(19) Europäisches Patentamt
European Patent Office
Office européen des brevets

(11) EP 0 640 655 B1

(12) EUROPÄISCHE PATENTSCHRIFT

(45) Veröffentlichungstag und Bekanntmachung des Hinweises auf die Patenterteilung:
**08.12.1999 Patentblatt 1999/49**

(51) Int Cl.[6]: **C08L 69/00**, C08K 5/51
// (C08L69/00, 25:02, 51:04, 27:12, 85:02)

(21) Anmeldenummer: **94112738.3**

(22) Anmeldetag: **16.08.1994**

(54) **Flammwidrige, spannungsrissbeständige Polycarbonat-ABS-Formmassen**

Flame-retardant, stress crack resistant polycarbonate ABS moulding composition

Compositions à mouler de polycarbonate et d'ABS ignifigues et résistant à la fissuration

(84) Benannte Vertragsstaaten:
**DE ES FR GB IT NL**

(30) Priorität: **26.08.1993 DE 4328656**

(43) Veröffentlichungstag der Anmeldung:
**01.03.1995 Patentblatt 1995/09**

(73) Patentinhaber: **BAYER AG**
**51368 Leverkusen (DE)**

(72) Erfinder:
- **Eckel, Thomas, Dr.**
  **D-41540 Dormagen (DE)**
- **Wittmann, Dieter, Dr.**
  **D-51061 Köln (DE)**
- **Öller, Manfred, Dr.**
  **D-47809 Krefeld (DE)**
- **Alberts, Heinrich, Dr.**
  **D-51519 Odenthal (DE)**

(56) Entgegenhaltungen:
**EP-A- 0 174 493** **EP-A- 0 363 608**
**EP-A- 0 491 986** **EP-A- 0 594 021**

- **DATABASE WPI Week 8726, Derwent Publications Ltd., London, GB; AN 85-002821 & JP-A-59 202 240 (DAIHACHI KAGAKU KOG KK)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 640 655 B1

## Beschreibung

Die vorliegende Erfindung betrifft flammwidrige Polycarbonat-ABS-Formmassen, die durch eine Additiv-Kombination aus einer Monophosphorverbindung und einer oligomeren Phosphorverbindung in der Spannungsrißbeständigkeit wesentlich verbessert sind.

EP-A 0 174 493 (US-P 4 983 658) beschreibt flammgeschützte, halogenhaltige Polymermischungen aus aromatischem Polycarbonat, styrolhaltigem Pfropfcopolymer, Monophosphaten und einer speziellen Polytetrafluorethylen-Formulierung. Im Brandverhalten und mechanischen Werte-Niveau sind diese Mischungen zwar ausreichend, allerdings können Defizite bei der Spannungsrißbeständigkeit auftreten.

In US-P 5 030 675 werden flammwidrige, thermoplastische Formmassen aus aromatischem Polycarbonat, ABS-Polymerisat, Polyalkylenterephthalat sowie Monophosphaten und fluorierten Polyolefinen als Flammschutzadditive beschrieben. Der guten Spannungsrißbeständigkeit stehen als Nachteile Defizite bei der Kerbschlagzähigkeit sowie ungenügende Thermostabilität bei hbher thermischer Belastung wie z.B. dem Verarbeitungsprozess gegenüber.

Diphosphate sind als Flammschutzadditve bekannt. In JA 59 202 240 wird die Herstellung eines solchen Produktes aus Phosphoroxichlorid, Diphenolen wie Hydrochinon oder Bisphenol A und Monophenolen wie Phenol oder Kresol beschrieben. Diese Diphosphate können in Polyamid oder Polycarbonat als Flammschutzmittel eingesetzt werden. In dieser Literaturstelle findet sich jedoch kein Hinweis auf eine verbesserte Spannungsrißbeständigkeit durch Zusatz des oligomeren Phosphats in Verbindung mit Polyalkylenterephthalaten zu Polycarbonat-Formmassen.

In EP-A 0 363 608 (= US-P 5 204 394) werden Polymermischungen aus aromatischem Polycarbonat, styrolhaltigem Copolymer oder Pfropfcopolymer sowie oligomeren Phosphaten als Flammschutzadditive beschrieben. In US-P 5 061 745 werden Polymermischungen aus aromatischem Polycarbonat, ABS-Pfropfpolymerisat und/oder styrolhaltigem Copolymer und Monophosphaten als Flammschutzadditive beschrieben. Zur Herstellung dünnwandiger Gehäuseteile ist das Niveau der Spannungsrißbeständigkeit dieser Mischungen oft nicht ausreichend.

Überraschenderweise wurde nun gefunden, daß sich flammwidrige Polycarbonat-ABS-Formmassen mit ausgezeichneter Spannungsrißbeständigkeit herstellen lassen, wenn eine Additiv-Kombination aus einer Monophosphorverbindung und einer oligomeren Phosphorverbindung zugesetzt wird. Eine besonders hohe Spannungsrißbeständigkeit wird erreicht, wenn das Gewichtsverhältnis von Monophosphorverbindung zu oligomerer Phosphorverbindung im Bereich 90:10 bis 10:90 liegt. Diese Formmassen eignen sich insbesondere zur Herstellung dünnwandiger Formteile (Datentechnik-Gehauseteile), wo hohe Verarbeitungstemperaturen und - Drücke zu einer erheblichen Belastung des eingesetzten Materials führen.

Gegenstand der Erfindung sind flammwidrige, thermoplastische Formmassen aus

A) 40 bis 98 Gew.-Teilen, vorzugsweise 50 bis 95 Gew.-Teilen, besonders bevorzugt 60 bis 90 Gew.-Teilen eines aromatischen Polycarbonats,

B) 3 bis 50, vorzugsweise 5 bis 40 Gew.-Teile, eines Vinyl-Copolymerisats aus wenigstens einem Monomeren aus der Reihe: Styrol, $\alpha$-Methylstyrol und/oder kernsubstituierten Styrolen,$C_1$-$C_8$-Alkylmethacrylat, $C_1$-$C_8$-Alkylacrylat (B.1) mit wenigstens einem Monomeren aus der Reihe: Acrylnitril, Methacrylnitril, $C_1$-$C_8$-Alkylmethacrylat, $C_1$-$C_8$-Alkylacrylat, Maleinsäureanhydrid und/oder N-substituiertem Maleinimid (B.2).

C) 0,5 bis 40 Gew.-Teilen, vorzugsweise 1 bis 20 Gew.-Teilen, besonders bevorzugt 2 bis 12 Gew.-Teilen eines Pfropfpolymerisats,

C.1) 5 bis 95 Gew.-Teile einer Mischung aus

C.1.1) 50 bis 95 Gew.-Teilen Styrol, $\alpha$-Methylstyrol, halogen- oder methylkernsubstituiertem Styrol, $C_1$-$C_8$-Alkylmethacrylat, $C_1$-$C_8$-Alkylacrylat oder Mischungen dieser Verbindungen und

C.1.2) 5 bis 50 Gew.-Teilen Acrylnitril, Methacrylnitril, $C_1$-$C_8$-Alkylmethacrylaten, $C_1$-$C_8$-Alkylacrylat, Maleinsäureanhydrid, $C_1$-$C_4$-alkyl- oder phenyl-N-substituierte Maleinimide oder Mischungen dieser Verbindungen auf

C.2) 5 bis 95, vorzugsweise 20 bis 70 Gew.-Teilen Polymerisat mit einer Glasübergangstemperatur unter -10°C,

D) 0,5 bis 20 Gew.-Teilen, bevorzugt 1 bis 18 Gew.-Teilen, besonders bevorzugt 2 bis 15 Gew.-Teilen einer Mischung aus

D.1) 10 bis 90 Gew.-%, vorzugsweise 12 bis 50, insbesondere 14 bis 40, ganz besonders bevorzugt 15 bis 40 Gew.-%, (bezogen auf die Gesamtmenge D) einer Monophosphorverbindung der Formel (I)

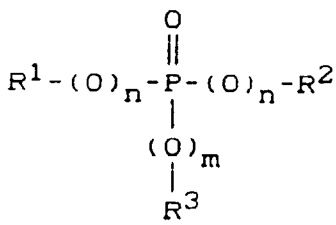

(I),

worin

| | |
|---|---|
| $R^1$, $R^2$ und $R^3$ | unabhängig voneinander jeweils gegebenenfalls halogeniertes $C_1$-$C_8$-Alkyl, $C_6$-$C_{20}$-Aryl oder $C_7$-$C_{12}$-Aralkyl, |
| m | 0 oder 1 und |
| n | 0 oder 1 bedeuten und |

D.2) 90 bis 10 Gew.-%, vorzugsweise 88 bis 50, insbesondere 86 bis 60, ganz besonders bevorzugt 85 bis 60 Gew.-% (bezogen auf die Gesamtmenge D) einer oligomeren Phosphorverbindung der Formel (II)

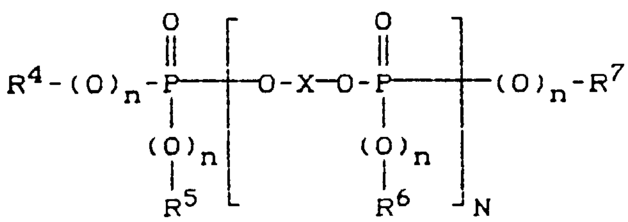

(II)

worin

| | |
|---|---|
| $R^4$, $R^5$, $R^6$, $R^7$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinander 0 oder 1, |
| N | 1 bis 5 und |
| X | einen ein- oder mehrkernigen aromatischen Rest mit 6 bis 30 C-Atomen bedeuten, |

und

E) 0,05 bis 5 Gew.-Teilen, vorzugsweise 0,1 bis 1 Gew.-Teil, besonders bevorzugt 0,1 bis 0,5 Gew.-Teilen eines fluorierten Polyolefins mit einem mittleren Teilchendurchmeser von 0,05 bis 1000 µm, einer Dichte von 1,2 bis 2,3 $g/cm^3$ und einem Fluorgehalt von 65 bis 76 Gew.-%.

Die Summe aller Gewichtsteile A+B+C+D+E ergibt 100.

<u>Komponente A</u>

Erfindungsgemäß geeignete, thermoplastische, aromatische Polycarbonate gemäß Komponente A sind solche auf Basis der Diphenole der Formel (III)

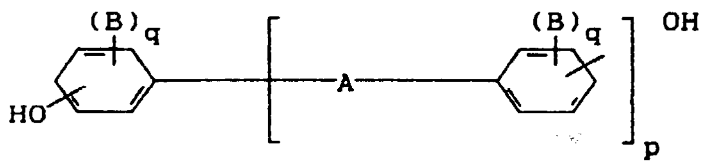

(III)

worin

A eine Einfachbindung, $C_1$-$C_5$-Alkylen, $C_2$-$C_5$-Alkyliden, $C_5$-$C_6$-Cycloalkyliden, -S- oder -$SO_2$-,

B Chlor, Brom

q 0, 1 oder 2 und

p 1 oder 0 sind

oder alkylsubstituierte Dihydroxyphenylcycloalkane der Formel (IV),

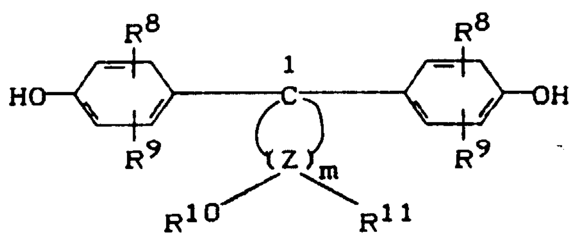

(IV)

worin

$R^8$ und $R^9$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4, 5, 6 oder 7, bevorzugt 4 oder 5,

$R^{10}$ und $R^{11}$ für jedes Z individuell wählbar, unabhängig voneinander Wasserstoff oder $C_1$-$C_6$-Alkyl

und

Z Kohlenstoff bedeuten, mit der Maßgabe, daß an mindestens einem Atom Z $R^{10}$ und $R^{11}$ gleichzeitig Alkyl bedeuten.

Geeignete Diphenole der Formel (III) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (III) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (IV) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol,

aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8 bis 20 C-Atomen in den Alkylsubstituenten gemäß deutscher Patentanmeldung P 3 506 472.2 (Le A 23 654), wie 3,5-di-tert.-Butylphenol, p-iso-Octylphenol), p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (III) und/oder (IV).

Die erfindungsgemäß geeigneten Polycarbonate A haben mittlere Molekulargewichte ($\overline{M}w$, Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden.

Komponente B

Erfindungsgemäß einsetzbare Vinyl-Copolymerisate gemäß Komponente B sind solche aus wenigstens einem Monomeren aus der Reihe: Styrol, α-Methylstyrol und/oder kernsubstituierten Styrolen $C_1$-$C_8$-Alkylmethacrylat, $C_1$-$C_8$-Alkylacrylat(B.1) mit wenigstens einem Monomeren aus der Reihe: Acrylnitril, Methacrylnitrll, $C_1$-$C_8$-Alkylmethacrylat, $C_1$-$C_8$-Alkylacrylat, Maleinsäureanhydrid und/oder N-substituiertem Maleinimid (B.2).

$C_1$-$C_8$-Alkylacrylate bzw. $C_1$-$C_8$-Akylmethacrylate sind Ester der Acrylsäure bzw. Methacrylsäure und einwertiger Alkohole mit 1 bis 8 C-Atomen. Besonders bevorzugt sind Methacrylsauremethylester, -ethylester und -propylester. Als besonders bevorzugter Methacrylsäureester wird Methylmethacrylat genannt.

Thermoplastische Copolymerisate mit einer Zusammensetzung gemäß Komponente B können bei der Pfropfpolymerisation zur Herstellung der Komponente C als Nebenprodukte entstehen, besonders dann, wenn große Mengen Monomere auf kleine Mengen Kautschuk gepfropft werden. Die erfindungsgemäß einzusetzende Menge an Copolymerisat B bezieht diese Nebenprodukte der Pfropfpolymerisation nicht mit ein.

Die Copolymerisate gemäß Komponente B sind harzartig, thermoplastisch und kautschukfrei.

Die thermoplastischen Copolymerisate B enthalten 50 bis 98, vorzugsweise 60 bis 95 Gew.-Teile B.1 und 50 bis 2, vorzugsweise 40 bis 5 Gew.-Teile B.2.

Besonders bevorzugte Copolymerisate B sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $M_w$ (Gewichtsmittel, ermittelt durch Lichtstreuung oder Sedimentation) zwischen 15 000 und 200 000.

Besonders bevorzugte erfindungsgemäße Copolymerisate B sind auch statistisch aufgebaute Copolymerisate aus Styrol und Maleinsäureanhydrid, die durch eine kontinuierliche Masse- oder Lösungsmittelpolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt zwischen 5 und 25 Gew.-%.

Die Molekulargewichte (Zahlenmittel $M_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinylcopolymerisate B auch kernsubstituierte Styrole wie p-Methylstyrol, Vinyltoluol, 2,4-Dimethylstyrol, und andere substituierte Styrole wie α-Methylstyrol enthalten.

Komponente C

Pfropfpolymerisate C) umfassen Pfropfpolymerisate mit kautschukelastischen Eigenschaften aus

C.1) 5 bis 95, vorzugsweise 30 bis 80, Gew.-Teile, einer Mischung aus

C.1.1) 50 bis 95 Gew.-Teilen Styrol, α-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methylacrylat, oder Mischungen dieser Verbindungen und

C.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. phenyl-N-substituierte Maleinimide oder Mischungen dieser Verbindungen auf

C.2) 5 bis 95, vorzugsweise 20 bis 70, Gew.-Teilen Polymerisat mit einer Glasübergangstemperatur unter -10°C;

also Polymerisate, wie sie z.B. in "Methoden der Organischen Chemie" (Houben-Weyl), Bd. 14/1, Georg Thieme-Verlag, Stuttgart 1961, S. 393 - 406 und in C.B. Bucknall, "Toughened Plastics", Appl. Science Publishers, London 1977, beschrieben sind. Bevorzugte Polymerisate C) sind partiell vernetzt und besitzen Gel-gehalte von über 20 Gew.-%, vorzugsweise über 40 Gew.-%, insbesondere über 60 Gew.-%.

Bevorzugte Pfropfpolymerisate C) sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsaurealkylestern, Vinylacetat, Acrylnitril, Styrol und/oder Alkylstyrolen gepfropfte Polybutadiene, Butadien/Styrol- oder Butadien/ Acrylnitril-Cpolymerisate, Polyisobutene oder Polyisoprene, wie sie z.B. in der DE-OS 2 348 377 (= US-PS 3 919 353) beschrieben sind.

Besonders bevorzugte Polymerisate C) sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate C) sind Pfropfpolymerisate, die durch Pfropfreaktion von

I. 10 bis 70, vorzugsweise 15 bis 50, insbesondere 20 bis 40, Gew.-%, bezogen auf Pfropfprodukt, mindestens eines (Meth-)Acrylsäureesters oder 10 bis 70, vorzugsweise 15 bis 50, insbesondere 20 bis 40 Gew.-X eines Gemisches aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind,
wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropf-polymerisats C) 0,05 bis 2, vorzugsweise 0,1 bis 0,6 µm, betragen.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-X, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/ oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C) auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Besonders bevorzugte Pfropfpolymerisate C) sind z.B. auch Pfropfpolymerisate aus

(a) 20 bis 90 Gew.-%, bezogen auf C), Acrylatkautschuk mit einer Glasübergangstemperatur unter -20°C als Pfropfgrundlage und
(b) 10 bis 80 Gew.-%, bezogen auf C), mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Acrylatkautschuke (a) der Polymerisate C) sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsaureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den Offenlegungsschriften DE 37 04 657, DE 37 04 655, DE 36 31 540 und DE 36 31 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Die für die bevorzugte Ausführungsform der gemeinsamen Fällung mit dem Tetrafluorethylenpolymerisat E) zu verwendenden wäßrigen Dispersionen von Pfropfpolymerisat C) besitzen im allgemeinen Feststoffgehalte von 25 bis 60, vorzugsweise von 30 bis 45 Gew.-%.

<u>Komponente D</u>

Die erfindungsgemäßen Polymermischungen enthalten als Flammschutzmittel eine Mischung aus einer Monophosphorverbindung D.1) und einer oligomeren Phosphorverbindung D.2). Komponente D.1) stellt eine Phosphorverbindung gemäß Formel (I) dar

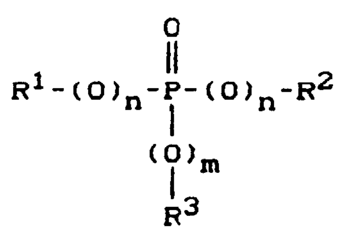

(I),

in der Formel bedeuten

| | |
|---|---|
| $R^1$, $R^2$ und $R^3$ | unabhängig voneinander jeweils gegegebenenfalls halogeniertes $C_1$-$C_8$-Alkyl, $C_6$-$C_{20}$-Aryl oder $C_7$-$C_{12}$-Aralkyl, |
| m | 0 oder 1 und |
| n | 0 oder 1. |

Die erfindungsgemäß geeigneten Phosphorverbindungen gemäß Komponente D.1) sind generell bekannt (s. beispielsweise Ullmanns Enzyklopädie der technischen Chemie, Bd. 18, S. 301 ff, 1979; Houben-Weyl, Methoden der

Organischen Chemie, Bd. 12/1, S. 43; Beilstein, Bd. 6, S. 177). Bevorzugte Substituenten $R^1$ bis $R^3$ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, gegebenenfalls durch Methyl, Ethyl, Chlor und/oder Brom substituiertes Phenyl.

Bevorzugte Phosphorverbindungen D.1) (Formel (I)) umfassen beispielsweise Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und Trikresylphosphinoxid.

Komponente D.2) stellt eine oligomere Phosphorverbindung der Formel (II) dar.

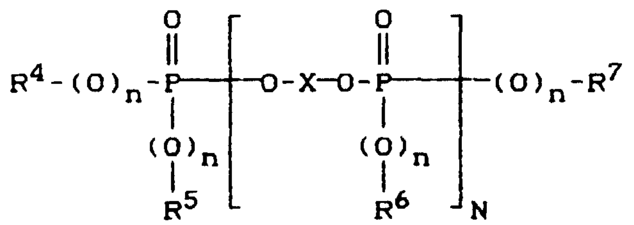

(II)

In der Formel bedeuten $R^4$, $R^5$, $R^6$, $R^7$ unabhängig voneinander $C_1$-$C_8$-Alkyl, $C_5$-$C_6$-Cycloalkyl, $C_6$-$C_{10}$-Aryl oder $C_7$-$C_{12}$-Aralkyl, bevorzugt sind $C_6$-$C_{10}$-Aryl oder $C_7$-$C_{12}$-Aralkyl. Die aromatischen Gruppen $R^4$, $R^5$, $R^6$ und $R^7$ können ihrerseits mit Halogen- oder Alkylgruppen substituiert sein. Besonders bevorzugte Aryl-Reste sind Kresyl, Phenyl, Xylenyl, Propylphenyl oder Butylphenyl sowie auch die bromierten und chlorierten Derivate davon.

X in der Formel (II) bedeutet einen ein- oder mehrkernigen aromatischen Rest mit 6 bis 30 C-Atomen. Dieser leitet sich von Diphenolen ab wie z.B. Bisphenol A, Resorcin oder Hydrochinon oder auch die chlorierten oder bromierten Derivate davon.

n in der Formel (II) kann unabhängig voneinander 0 oder 1 sein, vorzugsweise ist n gleich 1.

N kann Werte zwischen 1 und 5, vorzugsweise zwischen 1 und 2 einnehmen. Als erfindungsgemäße Komponente D.2) können auch Mischungen verschiedener oligomerer Phosphate eingesetzt werden. In diesem Fall hat N einen Durchschnittswert zwischen 1 und 5, vorzugsweise 1 und 2.

Die erfindungsgemäßen Polymermischungen enthalten als Flammschutzmittel eine Mischung aus D.1) und D.2). Die Mengenverhältnisse von D.1) und D.2) sind dabei so zu wählen, daß eine synergistische Wirkung erzielt wird. Die Mischung besteht im allgemeinen aus 10 bis 90 Gew.-% D.1) und 90 bis 10 Gew.-% D.2) (jeweils bezogen auf D)). Besonders günstige Eigenschaftsbedingungen ergeben sich im Vorzugsbereich von 12 bis 50, insbesondere 14 bis 40, ganz besonders bevorzugt 15 bis 40 Gew.-% D.1) und 88 bis 50, insbesondere 86 bis 60, ganz besonders bevorzugt 85 bis 60 Gew.-% D.2).

<u>Komponente E</u>

Die fluorierten Polyolefine E) sind hochmolekular und besitzen Glasübergangstemperaturen vorzugsweise von über -30°C, in der Regel von über 100°C, Fluorgehalte, von 65 bis 76, insbesondere von 70 bis 76, Gew-%, mittlere Teilchendurchmesser $d_{50}$ von 0,05 bis 1000, vorzugsweise 0,08 bis 20 µm. Die fluorierten Polyolefine E) haben eine Dichte von 1,2 bis 2,3 g/cm$^3$. Bevorzugte fluorierte Polyolefine E) sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl und Related Polymers" von Schildknecht, John Wiley & Sons, Inc., New York, 1962, Seite 484 - 494; "Fluorpolymers" von Wall, Wiley-Interscience, John Wiley & Sons, Inc., New York, Band 13, 1970, Seite 623-654; "Modern Plastics Encyclopedia", 1970 - 1971, Band 47, Nr. 10 A, Oktober 1970, Mc Graw-Hill, Inc., New York, Seite 134 und 774; "Modern Plastics Encyclopedia", 1975 - 1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C, (Nähere Einzelheiten s. z.B. US-Patent 2 393 967). Je nach Einsatzform liegt die Dichte dieser Materialien zwischen 1,2 und 2,3 g/cm$^3$, die mittlere Teilchengröße zwischen 0,05 und 1000 µm.

Erfindungsgemäß bevorzugten fluorierten Polyolefine E) sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm$^3$

und werden vorzugsweise in Form einer koagulierten Mischung von Emulsionen der Tetrafluorethylenpolymerisate E) mit Emulsionen der Pfropfpolymerisate C) eingesetzt.

Geeignete, in Pulverform einsetzbare fluorierte Polyolefine E) sind Tetrafluorethylenpolymerisate mit mittleren Teilchendurchmesser von 100 bis 1000 um und Dichten von 2,0 g/cm$^3$ bis 2,3 g/cm$^3$.

Zur Herstellung einer koagulierten Mischung aus C) und E) wird zuerst eine wäßrige Emulsion (Latex) eines Pfropfpolymerisates C) mit mittleren Latexteilchendurchmesser von 0,05 bis 2 µm, insbesondere 0,1 bis 0,6 µm, mit einer feinteiligen Emulsion eines Tetrafluorethylen-polymerisates E) in Wasser mit mittleren Teilchendurchmesser von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate C) besitzen Feststoffgehalte von 25 bis 50 Gew.-%, vorzugsweise von 30 bis 45 Gew.-%.

Die Mengenangabe bei der Beschreibung der Komponente C schließt den Anteil des Pfropfpolymerisats für die koagulierte Mischung aus Pfropfpolymerisat und fluoriertem Polyolefinen nicht mit ein.

In der Emulsionsmischung liegt das Gewichtsverhältnis Pfropfpolymerisat C) zum Tetrafluorethylenpolymerisat E) bei 95:5 bis 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können übliche Additive, wie Gleit- und Entformungsmittel, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, bestehend aus den Komponenten A bis E und gegebenenfalls weiteren bekannten Zusätzen wie Stabilisatoren, Farbstoffen, Pigmenten, Gleit- und Entformungsmitteln, Füll- und Verstärkungsstoffen, Nukleiermittel sowie Antistatika, werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert, wobei die Komponente E) vorzugsweise in Form der bereits erwähnten koagulierten Mischung eingesetzt wird.

Gegenstand der vorliegenden Erfindung ist somit auch ein Verfahren zur Herstellung von thermoplastischen Formmassen, bestehend aus den Komponenten A bis E sowie gegebenenfalls Stabilisatoren, Farbstoffen, Pigmenten, Gleit- und Entformungsmitteln, Füll- und Verstärkungsstoffen, Nukleiermitteln sowie Antistatika, das dadurch gekennzeichnet ist, daß man die Komponenten A bis E sowie gegebenenfalls Stabilisatoren, Farbstoffe, Pigmente, Fließmittel, Füll- und Verstärkungsstoffe, Gleit- und Entformungsmittel, Nukleiermittel und/oder Antistatika nach erfolgter Vermischung bei Temperaturen von 200 bis 330°C in gebräuchlichen Aggregaten schmelzcompoundiert oder schmelzextrudiert, wobei die Komponente E vorzugsweise in Form einer koagulierten Mischung mit der Komponente C eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

Beispiele

Komponente A

Polycarbonat auf Basis Bisphenol A mit einer relativen Lösungsviskosität von 1,26 bis 1,28 gemessen in

Methylenchlorid bei 25°C und einer Konzentration von 0,5 g/100 ml.

Komponente B

Styrol/Acrylnitril-Copolymerisat mit einem Styrol/Acrylnitril-Verhältnis von 72:28 und einer Grenzviskosität von 55 dl/g (Messung in Dimethylformamid bei 20°C).

Komponente C

Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

Komponente D

D.1) Triphenylphosphat (Disflamoll® TP der Firma Bayer AG)
D.2) m-Phenylen-bis(di-phenyl-phosphat) (Fyroflex RDP der Firma Akzo)

Komponente E

Tetrafluorethylenpolymerisat als koagulierte Mischung aus einer SAN-Pfropfpolymerisat-Emulsion gemäß C) in Wasser und einer Tetrafluorethylenpolymerisat-Emulsion in Wasser. Das Gewichtsverhältnis Pfropfpolymerisat C) zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

Herstellung von E

Die Emulsion des Tetrafluorethylenpolymerisats (Teflon 30 N der Fa. DuPont) wird mit der Emulsion des SAN-Pfropfpolymerisats C) vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

Herstellung und Prüfung der erfindungsgemäßen Formmassen

Das Mischen der Komponenten A bis E erfolgte auf einem 3-1-Innenkneter. Die Formkörper wurden auf einer Spritzgießmaschine Typ Arburg 270 E bei 260°C hergestellt.

Das Spannungsrißverhalten wurde an Stäben der Abmessung 80x10x4 mm, Massetemperatur 260°C untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung 2,4 %) und bei Zimmertemperatur im Testmedium gelagert. Das Spannungsrißverhalten wurde über die Rißbildung bzw. den Bruch in Abhängigkeit von der Expositionszeit im Testmedium beurteilt.

Die Zusammensetzung der geprüften Materialien sowie die erhaltenen Daten sind in der folgenden Tabelle zusammen-gefaßt.

Aus der Tabelle geht hervor, daß die Vergleichsbeispiele 1 und 8 mit der reinen Komponente D.2) bzw. D.1) deutlich geringere Spannungsrißbeständigkeiten besitzen als die erfindungsgemäßen Beispiele 2 bis 7.

Tabelle

| Zusammensetzung und Eigenschaften der Formmassen | | | | | | | |
|---|---|---|---|---|---|---|---|
| Beispiel | Komponenten | | | | | | Bruch bei |
| | A | B | C | D.1 | D.2 | E | $\varepsilon_x = 2{,}4$ % |
| | [Gew.-Teile] | | | | | | [min] |
| 1 (Vgl.) | 67 | 10 | 7,5 | - | 10 | 3,5 | 3,4 |
| 2 | 67 | 10 | 7,5 | 1 | 9 | 3,5 | 3,5 |
| 3 | 67 | 10 | 7,5 | 1,5 | 8,5 | 3,5 | 4,7 |
| 4 | 67 | 10 | 7,5 | 2 | 8 | 3,5 | 5,6 |
| 5 | 67 | 10 | 7,5 | 3 | 7 | 3,5 | 4,7 |
| 6 | 67 | 10 | 7,5 | 4 | 6 | 3,5 | 4,3 |
| 7 | 67 | 10 | 7,5 | 5 | 5 | 3,5 | 3,4 |
| 8 (Vgl.) | 67 | 10 | 7,5 | 10 | - | 3,5 | 2,5 |

## Patentansprüche

**1.** Flammwidrige, thermoplastische Formmassen enthaltend

A) 40 bis 98 Gew.-Teile eines aromatischen Polycarbonats,

B) 3 bis 50 Gew.-Teile eines Vinylcopolymerisats aus wenigstens einem Monomeren aus der Reihe: Styrol, α-Methylstyrol und/oder kernsubstituierten Styrolen,$C_1$-$C_8$-Alkylmethacrylat, $C_1$-$C_8$-Alkylacrylat (B.1) mit wenigstens einem Monomeren aus der Reihe: Acrylnitril, Methacrylnitril, $C_1$-$C_8$-Alkylmethacrylat, $C_1$-$C_8$-Alkylacrylat, Maleinsäureanhydrid und/oder N-substituiertem Maleinimid (B.2).

C) 0,5 bis 40 Gew.-Teile eines Pfropfpolymerisats aus

C.1) 5 bis 95 Gew.-Teile einer Mischung aus

C.1.1) 50 bis 95 Gew.-Teilen Styrol, α-Methylstyrol, halogen- oder methylkernsubstituiertem Styrol, $C_1$-$C_8$-Alkylmethacrylat, $C_1$-$C_8$-Alkylacrylat oder Mischungen dieser Verbindungen und

C.1.2) 5 bis 50 Gew.-Teilen Acrylnitril, Methacrylnitril, $C_1$-$C_8$-Alkylmethacrylaten, $C_1$-$C_8$-Alkylacrylat, Maleinsäureanhydrid, $C_1$-$C_4$-alkyl- oder phenyl-N-substituierte Maleinimide oder Mischungen dieser Verbindungen auf

C.2) 5 bis 95, vorzugsweise 20 bis 70 Gew.-Teilen Polymerisat mit einer Glasübergangstemperatur unter -10°C.

D) 0,5 bis 20 Gew.-Teile einer Mischung aus

D.1) 10 bis 90 Gew.-%, bezogen auf D), einer Monophosphorverbindung der Formel (1)

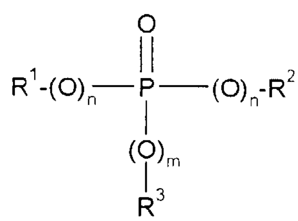

(I),

worin

| | |
|---|---|
| $R^1$, $R^2$ und $R^3$ | unabhängig voneinander jeweils gegebenenfalls halogeniertes $C_1$-$C_8$-Alkyl, $C_6$-$C_{20}$-Aryl oder $C_7$-$C_{12}$-Aralkyl, |
| m | 0 oder 1 und |
| n | 0 oder 1 bedeuten und |

D.2) 90 bis 10 Gew-%, bezogen auf D), einer oligomeren Phosphorverbindung der Formel (II)

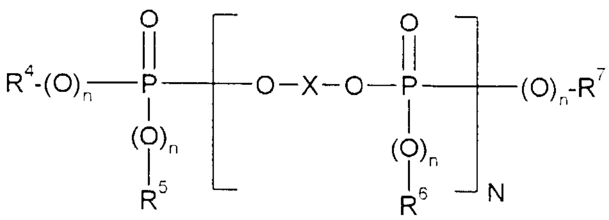

(II),

worin

| | |
|---|---|
| $R^4$, $R^5$, $R^6$, $R^7$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinander 0 oder 1, |
| N | 1 bis 5 und |
| X | einen ein- oder mehrkernigen aromatischen Rest mit 6 bis 30 C-Atomen bedeuten, |

und

E) 0,05 bis 5 Gew.-Teile eines fluorierten Polyolefins mit einem mittleren Teilchendurchmesser von 0,05 bis 1 000 µm, einer Dichte von 1,2 bis 2,3 g/cm$^3$ und einem Fluorgehalt von 65 bis 76 Gew.-%.

**2.** Formmassen gemäß Anspruch 1, enthaltend 50 bis 95 Gew.-Teile eines aromatischen Polycarbonats A.

**3.** Formmassen gemäß einem der vorhergehenden Ansprüche, enthaltend als Polymerisat gemäß Komponente C. 2 Dienkautschuke, Acrylatkautschuke, Silikonkautschuke oder Ethylen-Propylen-Dien-Kautschuke.

**4.** Formmassen gemäß der vorhergehenden Ansprüche, enthaltend als Komponente C.2 ein Dienkautschuk.

**5.** Formmassen gemäß der vorhergehenden Ansprüche, enthaltend Komponente D in einer synergistisch wirkenden Menge aus einer Monophosphorverbindung D.1) und einer oligomeren Phosphorverbindung D.2).

**6.** Formmassen gemäß der vorhergehenden Ansprüche, enthaltend als Komponente D) eine Mischung aus 12 bis 40 Gew.-% D.1) und 60 bis 88 Gew.-% D.2).

**7.** Formmassen gemäß der vorhergehenden Ansprüche, enthaltend als Komponente D. 1) Triphenylphosphat.

**8.** Formmassen gemäß der vorhergehenden Ansprüche, enthaltend als Komponente D.2) ein oligomeres Phosphat, bei dem $R^4$, $R^5$, $R^6$ und $R^7$ Phenylgruppen und X eine Phenylengruppe darstellt.

**9.** Flammwidrige thermoplastische Formmasse gemäß der vorhergehenden Ansprüche, enthaltend Zusatzstoffe ausgewählt aus der Gruppe der Stabilisatoren, Farbstoffe, Pigmente, Gleit- und Entformungsmittel, Füll- und Verstärkungsmittel, Nukleiermittel und Antistatika.

**10.** Venvendung der Formmassen gemäß der vorhergehenden Ansprüche zur Herstellung von Formkörpern.

**11.** Formkörper, hergestellt aus Formmassen gemäß Anspruch 1 bis 9.

**12.** Verfahren zur Herstellung von thermoplastischen Formmassen gemäß der Ansprüche 1 bis 9, dadurch gekennzeichnet, daß man die Komponenten A bis E sowie gegebenenfalls Stabilisatoren, Farbstoffe, Pigmente, Fließmittel, Füll- und Verstärkungsstoffe, Gleit- und Entformungsmittel, Nukleiermittel und/oder Antistatika nach erfolgter Vermischung bei Temperaturen von 200 bis 330 °C in gebräuchlichen Aggregaten schmelzcompoundiert oder schmelzextrudiert.

## Claims

**1.** Flame-resistant thermoplastic moulding compositions containing

A) 40 to 98 parts by wt. of an aromatic polycarbonate,

B) 3 to 50 parts by wt. of a vinyl copolymer of at least one monomer from the set: styrene, α-methylstyrene and/or ring-substituted styrenes, $C_1$-$C_8$ alkyl methacrylate, $C_1$-$C_8$ alkyl acrylate (B.1) with at least one monomer from the set: acrylonitrile, methacrylonitrile, $C_1$-$C_8$ alkyl methacrylate, $C_1$-$C_8$ alkyl acrylate, maleic anhydride and/or N-substituted maleic imide (B.2),

C) 0.5 to 40 parts by wt. of a graft polymer of

C.1) 5 to 95 parts by wt. of a mixture of

C.1.1) 50 to 95 parts by wt. of styrene, α-methylstyrene, halogen or methyl ring-substituted styrene, $C_1$-$C_8$ alkyl methacrylate, $C_1$-$C_8$ alkyl acrylate or mixtures of these compounds and

C.1.2) 5 to 50 parts by wt. of acrylonitrile, methacrylonitrile, $C_1$-$C_8$ alkyl methacrylates, $C_1$-$C_8$ alkyl acrylate, maleic anhydride, $C_1$-$C_4$ alkyl or phenyl N-substituted maleic imide or mixtures of these compounds on

C.2) 5 to 95, preferably 20 to 70 parts by wt. of a polymer with a glass transition temperature below -10°C,

D) 0.5 to 20 parts by wt. of a mixture of

D.1) 10 to 90 wt.%, with respect to D), of a monophosphorus compound of the formula (I)

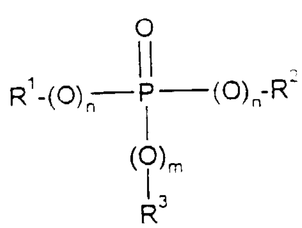

(I),

in which

| | |
|---|---|
| $R^1$, $R^2$ and $R^3$, | independently of each other, each represent optionally halogenated $C_1$-$C_8$ alkyl, $C_6$-$C_{20}$ aryl or $C_7$-$C_{12}$ aralkyl groups, |
| m | represents 0 or 1 and |
| n | represents 0 or 1 and |

D.2) 90 to 10 wt.%, with respect to D), of an oligomeric phosphorus compound of the formula (II)

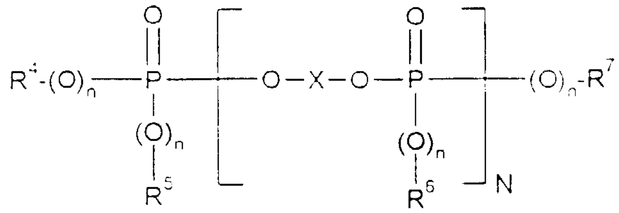

(II),

in which

| | |
|---|---|
| $R^4$, $R^5$, $R^6$ and $R^7$, | independently of each other, represent a $C_1$-$C_8$ alkyl, $C_5$-$C_6$ cycloalkyl, $C_6$-$C_{10}$ aryl or $C_7$-$C_{12}$ aralkyl group, |
| n | independently of each other, represent 0 or 1, |
| N | represents 1 to 5 and |
| X | represents a mono or polynuclear aromatic group with 6 to 30 carbon atoms, |

and

E) 0.05 to 5 parts by wt. of a fluorinated polyolefin with an average particle diameter of 0.05 to 1,000 μm, a density of 1.2 to 2.3 $g/cm^3$ and a fluorine content of 65 to 76 wt.%.

**2.** Moulding compositions according to Claim 1, containing 50 to 95 parts by wt. of an aromatic polycarbonate A.

**3.** Moulding compositions according to one of the preceding Claims containing, as polymer in accordance with component C.2, a diene rubber, acrylate rubber, silicone rubber or ethylene/propylene/diene rubber.

**4.** Moulding compositions according to one of the preceding Claims containing, as component C.2, a diene rubber.

**5.** Moulding compositions according to one of the preceding Claims containing component D in a synergistically active mixture of a monophosphorus compound D.1) and an oligomeric phosphorus compound D.2).

**6.** Moulding compositions according to one of the preceding Claims containing, as component D), a mixture of 12 to 40 wt.% of D.1) and 60 to 88 wt.% of D.2).

**7.** Moulding ccmpositions according to one of the preceding Claims containing, as component D.1), triphenyl phosphate.

**8.** Moulding compositions according to one of the preceding Claims containing, as component D.2), an oligomeric phosphate in which $R^4$, $R^5$, $R^6$ and $R^7$ represent phenyl groups and X represents a phenylene group.

**9.** Flame-resistant thermoplastic moulding compositions according to the preceding Claims, containing additives selected from the group of stabilisers, colorants, pigments, lubricants and demoulding agents, fillers and reinforcing agents, nucleating agents and antistatic agents.

**10.** Use of moulding compositions according to the preceding Claims to produce moulded items.

**11.** Moulded items produced from moulding compositions according to Claims 1 to 9.

**12.** A process for preparing moulding compositions according to Claims 1 to 9, characterised in that components A to E and optionally stabilisers, colorants, pigments, flow control agents, fillers and reinforcing agents, lubricants and demoulding agents, nucleating agents and/or antistatic agents are melt-compounded or melt-extruded in conventional units after being mixed at temperatures of 200 to 330°C.

## Revendications

**1.** Matières à mouler thermoplastiques ignifuges contenant

A) 40 à 98 parties en poids d'un polycarbonate aromatique,
B) 3 à 50 parties en poids d'un copolymère vinylique d'au moins un monomère de la classe du styrène, de l'α-méthylstyrène et/ou des styrènes substitués dans le noyau, des méthacrylates d'alkyle en $C_1$-$C_8$, des acrylates d'alkyle en $C_1$-$C_8$ (B.1) et d'au moins un monomère de la classe de l'acrylonitrile, du méthacrylonitrile, des méthacrylates d'alkyle en $C_1$-$C_8$, des acrylates d'alkyle en $C_1$-$C_8$, de l'anhydride maléique et/ou des maléimides substitués à l'azote (B.2).
C) 0,5 à 40 parties en poids d'un polymère greffé de

C.1) 5 à 95 parties en poids d'un mélange de

C.1.1) 50 à 95 parties en poids de styrène, d'α-méthylstyrène, d'un styrène halogéné ou méthylé dans le noyau, d'un méthacrylate d'alkyle en $C_1$-$C_8$, d'un acrylate d'alkyle en $C_1$-$C_8$ ou d'un mélange de ces composés et
C. 1.2) 5 à 50 parties en poids d'acrylonitrile, de méthacrylonitrile, d'un méthacrylate d'alkyle en $C_1$-$C_8$, d'un acrylate d'alkyle en $C_1$-$C_8$, de l'anhydride maléique, d'un maléimide substitué à l'azote par un groupe alkyle en $C_1$-$C_4$ ou par un groupe phényle, ou d'un mélange de ces composés, sur

C.2) 5 à 95, de préférence 20 à 70 parties en poids d'un polymère ayant une température de transition du second ordre inférieure à -10°C,

D) 0,5 à 20 parties en poids d'un mélange de

D.1) 10 à 90 % en poids (par rapport à D) d'un dérivé monophosphoré de formule (I)

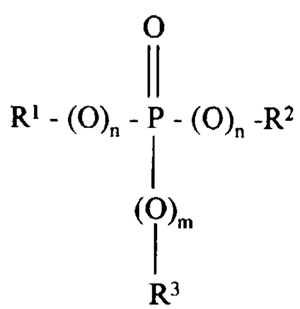

(I)

dans laquelle

| | |
|---|---|
| $R^1$, $R^2$ et $R^3$ | représentent chacun, indépendamment les uns des autres, un groupe alkyle en $C_1$-$C_8$, aryle en $C_6$-$C_{20}$ ou aralkyle en $C_7$-$C_{12}$ éventuellement halogéné, |
| m | est égal à 0 ou 1 et |
| n | est égal à 0 ou 1 et |

D.2) 90 à 10 % en poids, par rapport à D, d'un dérivé phosphoré oligomère de formule (II)

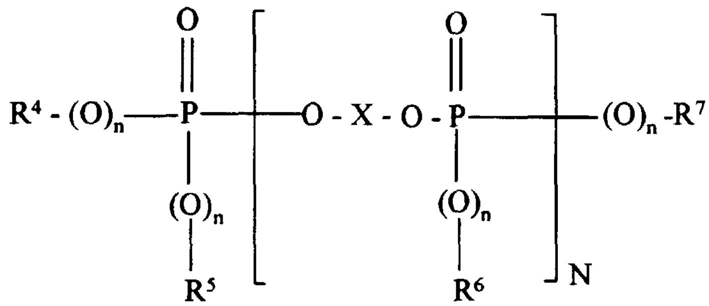

(II)

dans laquelle

| | |
|---|---|
| $R^4$, $R^5$, $R^6$ et $R^7$ | représentent chacun, indépendamment les uns des autres, un groupe alkyle en $C_1$-$C_8$, cycloalkyle en $C_5$-$C_6$, aryle en $C_6$-$C_{10}$ ou aralkyle en $C_7$-$C_{12}$, |
| les indices n | sont égaux chacun, indépendamment les uns des autres, à 0 ou 1, |
| N | est un nombre allant de 1 à 5 et |
| X | représente un radical aromatique mono- ou poly-cyclique en $C_6$-$C_{30}$, |

et

E) 0,05 à 5 parties en poids d'une polyoléfine fluorée à un diamètre de particule moyen de 0,05 à 1000 µm, une densité de 1,2 à 2,3 g/$cm^3$ et une teneur en fluor de 65 à 76 % en poids.

**2.** Matières à mouler selon la revendication 1, contenant 50 à 95 parties en poids d'un polycarbonate aromatique A.

**3.** Matières à mouler selon l'une des revendications qui précèdent, contenant en tant que polymères du composant C.2 des caoutchoucs diéniques, des caoutchoucs d'acrylates, des caoutchoucs de silicones ou des caoutchoucs d'éthylène-propylène-diène.

**4.** Matières à mouler selon les revendications qui précèdent contenant un caoutchouc diénique en tant que composant C.2.

**5.** Matières à mouler selon les revendications qui précèdent, contenant en tant que composant D un mélange à effets synergétiques d'un dérivé monophosphoré D.1 et d'un dérivé phosphoré oligomère D.2.

**6.** Matières à mouler selon les revendications qui précèdent contenant en tant que composant D un mélange de 12 à 40 % en poids de D.1 et de 60 à 88 % en poids de D.2.

**7.** Matières à mouler selon les revendications qui précèdent contenant du phosphate de triphényle en tant que composant D.1.

**8.** Matières à mouler selon les revendications qui précèdent contenant en tant que composant D.2 un phosphate oligomère pour lequel $R^4$, $R^5$, $R^6$ et $R^7$ sont des groupes phényle et X un groupe phénylène.

**9.** Matières à mouler thermoplastiques ignifuges selon les revendications qui précèdent, contenant des additifs choisis dans le groupe des stabilisants, des colorants, des pigments, des agents lubrifiants et des agents de démoulage, des matières de charge et matières renforçantes, des agents de nucléation et agents antistatiques.

**10.** Utilisation des matières à mouler selon les revendications qui précèdent pour la fabrication d'objets moulés.

**11.** Objets moulés fabriqués à partir des matières à mouler selon les revendications 1 à 9.

**12.** Procédé pour la préparation des matières à mouler thermoplastiques selon les revendications 1 à 9, caractérisé en ce que après mélange des composants A à E et le cas échéant de stabilisants, de colorants, de pigments, d'agents fluidifiants, de matières de charge et matières renforçantes, d'agents lubrifiants et d'agents de démoulage,

d'agents de nucléation et/ou d'agents antistatiques, on mélange ou on extrude à l'état fondu à des températures de 200 à 330°C dans des appareillages usuels.